# EUROPEAN PATENT APPLICATION

(11) **EP 2 781 627 A1**
(43) Date of publication of application: **24.09.2014**
(21) Application number: 11875832.5
(22) Date of filing: 15.11.2011
(51) Int. Cl.: C25D 1/10, B29C 33/38

(54) **PRODUCTION METHOD FOR MULTI-STAGE TRANSFER MOLD, SAID MULTI-STAGE TRANSFER MOLD, AND COMPONENT PRODUCED THEREBY**

(71) Applicant: Leap Co. Ltd., Kanagawa 224-0032 (JP)
(72) Inventor: SANO, Takashi, Yokohama-shi Kanagawa 224-0032 (JP); TERADA, Tokinori, Yokohama-shi Kanagawa 224-0032 (JP)
(74) Representative: Becker Kurig Straus
(86) International application number: PCT/JP2011/006357
(87) International publication number: WO 2013/072955

(57) **Abstract**

A multi-stage transfer mold manufacturing method that can save labor in a step of connecting by a multi-stage connection, a multi-stage transfer mold manufactured thereby, and a component produced thereby are provided for production of a multi-stage component by electroplating. A method therefor includes the steps of: forming a resist pattern having a shape of a component with a desired aspect ratio on a metal substrate, a sidewall of the resist pattern forming a desired angle α; forming, on the resist pattern, a resist pattern having a shape and a thickness of a connection pillar for connecting with an upper layer; creating a transfer mold by filling up the resist pattern on which the resist pattern having the shape of the connection pillar by electroplating to a predetermined thickness; and providing a master mold by separating the transfer mold from the metal substrate.

## Description

### Technical Field

The present invention relates to a multi-stage transfer mold manufacturing method, a multi-stage transfer mold manufactured thereby, and a component produced thereby. More specifically, the present invention relates to such a method for manufacturing a multi-stage transfer mold by electroplating in production of a multi-stage component by electroplating that can save labor in steps of forming multiple stages and of multi-stage connection, a multi-stage transfer mold manufactured thereby and a component produced thereby.

### Background Art

Electroplating allows formation of a thick film conductor with less restriction in terms of dimension. It is therefore widely used in production of display components such as a dial and hands of a watch, machine components such as a small gear, a spring, a pipe and a diaphragm (pressure sensor), and electronic components such as a wiring of a semiconductor device and a coil.

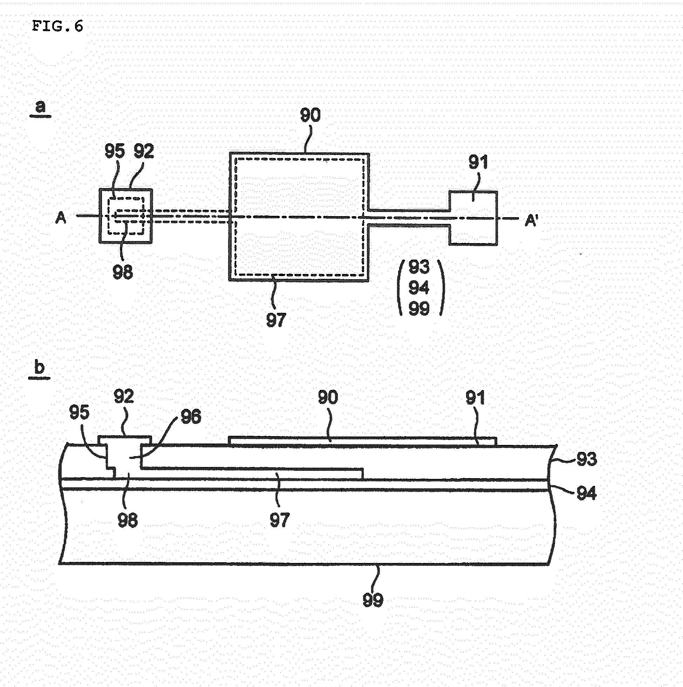

A multi-stage connection technique is often used in a multi-layer wiring of a semiconductor device. Fig. 6 is a structural drawing showing a capacitor provided on a conventional semiconductor substrate. Fig. 6a depicts a plan view of the capacitor, and Fig. 6b depicts a cross-sectional view of the capacitor taken along the dash-dot line AA'. In Fig. 6, a thermally-oxidized film 94 is provided on a semiconductor substrate 99. A thermally-oxidized film 94 is provided thereon with an Al film which serves as a lower electrode 97. The lower electrode 97 and an upper extraction electrode 98 are patterned by photolithography.

Next, a SiO₂ film 93 is formed in order to cover the lower electrode 97 and the upper extraction electrode 98 so that a desired capacitance is obtained. A contact hole 95 for connecting the upper extraction electrode 98 with an upper terminal 92 is then formed by etching the SiO₂ film 93 by photolithography.

This is followed by forming an Al film so as to fill up the contact hole 95 and then forming a pattern of a contact hole, also by photolithography, in the portion where a contact is to be made with an upper part. Subsequently, the Al film is etched except the portion of the contact hole, thereby providing a connection pillar 96 that connects the upper part with a lower part. An Al film that serves as an upper electrode is further formed, and an upper electrode 90 and upper terminals 91 and 92 are patterned by photolithography. A desired capacitor is thus produced.

A connection with another electronic device (not shown) at the upper part requires, as just described, a step of forming the contact hole 95 for connecting the upper extraction electrode 98 with the upper terminal 92 and a step of filling up the contact hole 95 with the Al film to provide a pillared conductor of Al for the connection with the upper extraction electrode 98. This causes, in manufacturing an intended semiconductor device, the number of steps required for the extraction of the electrode terminal to the upper part to increase. Furthermore, there has been no effective multi-stage connection technique in manufacturing electronic components of a semiconductor device such as a wiring, a coil and a capacitor by electroplating.

Patent Document 1 discloses a semiconductor device comprising: an inter-layer film layer including semiconductor elements; a multi-layered wiring portion that has air gaps and is provided on the inter-layer film layer; and a pillared supporter provided to stand on the inter-layer film layer and supporting any one of a plurality of wiring portions that constitute the multi-layered wiring portion, the supporter being made of the same material as a material forming the wiring portions and electrically connected to only said one of the wiring portions.

### Citation List

### Patent Documents

Patent Document 1: Japanese Patent Application Laid-Open No. 2010-108966

### Summary of the Invention

### Problems to be solved by the Invention

The present invention has been made to solve the above problem, and its purpose is to provide such a method for manufacturing a multi-stage transfer mold in production of a multi-stage component by electroplating that can save labor in steps of forming multiple stages and of multi-stage connection, a multi-stage transfer mold manufactured thereby and a component produced thereby. It is to be noted that there are four types of transfer molds which are: a master mold, a mother mold, a son mold, and a transfer mold. The master mold is a mold which serves as a prototype for component production. Usually, it is not directly used for component production. The mother mold is a mold which is created by using the master mold so as to have an inverse contour of the master mold. The mother mold as well is not directly used for the component production. The son mold is a mold which is created by using the mother mold so as to have an inverse contour of the mother mold. Therefore, the son mold has a shape that is identical with the master mold. The transfer mold is generally formed by subjecting the son mold to an insulation layer formation process, a releasing layer formation process, etc. The component production is then carried out with use of this transfer mold, and when it is worn off, a new transfer mold is created again from the master mold, subsequently to the mother mold and the son mold.

### Means for solving the Problems

A multi-stage transfer mold manufacturing method according to the present invention includes steps of: forming a resist pattern having a shape of a component with a desired aspect ratio on a metal substrate, a sidewall of the resist pattern forming a desired angle α; forming, on the resist pattern, a resist pattern having a shape and a thickness of a connection pillar for connecting with an upper layer; creating a transfer mold by filling up the resist pattern on which the resist pattern having the shape of the connection pillar by electroplating to a predetermined thickness; and providing a master mold by separating the transfer mold from the metal substrate leaving the metal substrate and the resist pattern.

A multi-stage transfer mold according to the present invention includes steps of: forming a resist pattern having a shape of a component with a desired aspect ratio on a metal substrate, a sidewall of the resist pattern forming a desired angle α; forming, on the resist pattern, a resist pattern having a shape and a thickness of a connection pillar for connecting with an upper layer; creating a transfer mold by filling up the resist pattern on which the resist pattern having the shape of the connection pillar by electroplating to a predetermined thickness; providing a master mold by separating the transfer mold from the metal substrate leaving the metal substrate and the resist pattern; creating a son mold by transferring by way of the master mold and a mother mold; and providing a transfer mold by performing, on the son mold, a releasing layer formation process for facilitating a release of the component to be formed by electroplating and an insulation layer formation process for forming an insulation layer in that portion which is other than a portion in which the component is to be formed.

The multi-stage transfer mold manufacturing method according to the present invention includes a step of forming a layer on a surface of the metal substrate of the above method as a first step.

A multi-stage transfer mold manufacturing method according to the present invention includes steps of: forming a resist pattern having a shape of a component with a desired aspect ratio on a metal substrate, a sidewall of the resist pattern forming an angle of approximately 90°; forming, on the resist pattern, a resist pattern having a shape and a thickness of a connection pillar for connecting with an upper layer; creating a transfer mold by filling up the resist pattern on which the resist pattern having the shape of the connection pillar by electroplating to a predetermined thickness; separating the transfer mold from the metal substrate; removing a photoresist partially to leave a resist pattern layer in that portion on the separated transfer mold which is other than a portion corresponding to the component to be transferred; and providing a master mold by treating the sidewall of the shape of the component with beam irradiation using the resist pattern layer as a protective layer, the beam irradiation being modulated such that the angle at the sidewall of the shape of the component is tailored to form approximately 90° or a given angle less than 90°.

A multi-stage transfer mold manufacturing method according to the present invention includes steps of: forming a resist pattern having a shape of a component with a desired aspect ratio on a metal substrate, a sidewall of the resist pattern forming an angle of approximately 90°; forming, on the resist pattern, a resist pattern having a shape and a thickness of a connection pillar for connecting with an upper layer; creating a transfer mold by filling up the resist pattern on which the resist pattern having the shape of the connection pillar by electroplating to a predetermined thickness; separating the transfer mold from the metal substrate; removing a photoresist partially to leave a resist pattern layer in that portion on the separated transfer mold which is other than a portion corresponding to the component to be transferred; providing a master mold by treating the sidewall of the shape of the component with beam irradiation using the resist pattern layer as a protective layer, the beam irradiation being modulated such that the angle at the sidewall of the shape of the component is tailored to form approximately 90° or a given angle less than 90°; creating a son mold by transferring by way of the master mold and a mother mold; and providing a transfer mold by performing, on the son mold, a releasing layer formation process for facilitating a release of the component to be formed by electroplating and an insulation layer formation process for forming an insulation layer in that portion which is other than a portion in which the component is to be formed.

The multi-stage transfer mold manufacturing method according to the present invention includes a step of forming a surface roughening layer of the above metal substrate as a first step.

A master mold according to the present invention is manufactured by the above multi-stage transfer mold manufacturing method and has a cross-sectional surface with a desired aspect ratio, a sidewall of the cross-sectional surface forming an angle between 45° and 88°

A transfer mold according to the present invention is manufactured by the above multi-stage transfer mold manufacturing method.

A component produced by electroplating in the present invention is produced by using the above transfer mold.

### Advantageous Effect of the Invention

The present invention makes it possible to provide such a method for manufacturing a multi-stage transfer mold by electroplating in production of a multi-stage component by electroplating that can save labor in steps of forming multiple stages and of multi-stage connection, a multi-stage transfer mold manufactured thereby and a component produced thereby.

### Brief Description of the Drawings

Fig. 1 is a process drawing showing the steps for manufacturing a multi-stage transfer mold by electroplating according to the present invention.
Fig. 2 is a process drawing showing the steps for manufacturing a multi-stage transfer mold by a beam according to the present invention.
Fig. 3 is a process drawing showing the steps for manufacturing a multi-stage son mold by electroplating according to the present invention.
Fig. 4 is a process drawing showing the steps for manufacturing a multi-stage transfer mask according to the present invention.
Fig. 5 is a process drawing showing the steps for manufacturing a component by electroplating with use of the multi-stage transfer mask according to the present invention.
Fig. 6 is a structural drawing showing a capacitor provided on a conventional semiconductor substrate.

### Mode for carrying out the Invention

### Embodiments

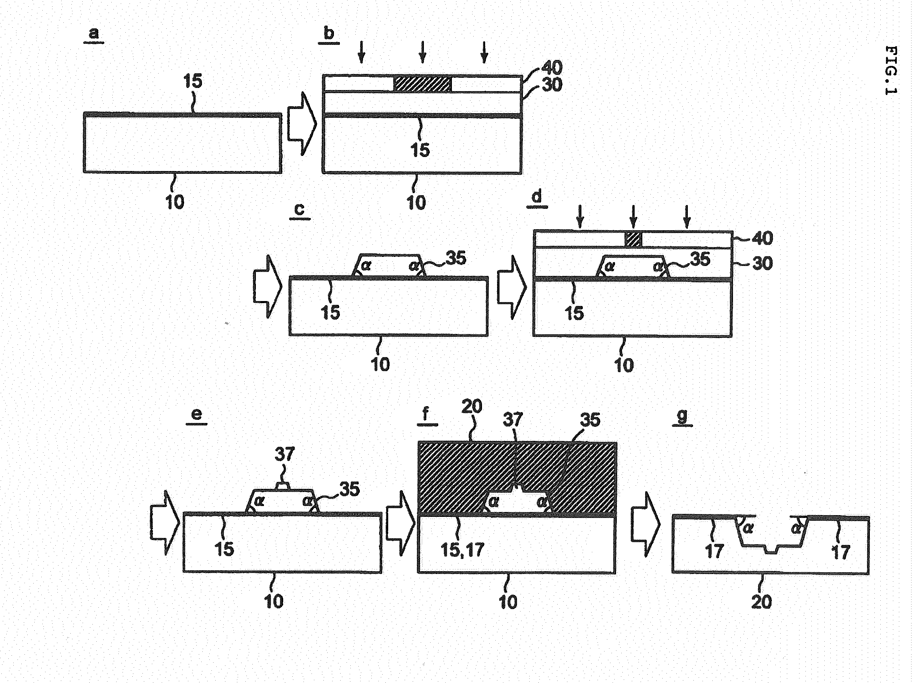

A first embodiment of the present invention is described with reference to the drawings. Fig. 1 is a process drawing showing the steps for manufacturing a multi-stage master mold by electroplating according to the present invention. In Fig. 1a, a top surface of a metal substrate 10 is provided with a multi-stage master mold roughening layer 15 for roughening a contact surface of the multi-stage master mold to be formed by electroplating. The roughening layer 15 is provided for the purpose of increasing adhesion strength to an insulation layer formed thereon and may be formed by roughening the surface of the metal substrate 10 directly by hydrochloric acid treatment or the like. Alternatively, a stripe-like photo resist pattern layer, a lattice-like photo resist pattern layer or the like, which is suitable for roughening, may be formed as the roughening layer 15 by partially removing the photoresist. Here, as long as there is no problem of adhesion strength to an insulation layer deposited on a son mold 60 described later, the roughening layer 15 may be omitted.

In Fig. 1b, a photoresist 30 for forming a pattern of a shape of a component to be produced is applied onto the roughening layer 15 on the metal substrate 10 to a predetermined thickness. This is for the purpose of obtaining a component having such a shape that has a desired aspect ratio and desired angles α at sidewalls thereof. For example, in a case where a wiring of a semiconductor electronic component or a coil with a line width of 5 µm is to be produced, the photoresist 30 is applied to a thickness of 10 µm so that the electronic component or the coil has the thickness of 10 µm. The photoresist 30 is then subjected to an exposure effected from the direction of the arrows with an intervening photomask 40 having a pattern of a desired component. Fig. 1c shows the resist pattern 35 where the pattern of the component is formed by subjecting the resist pattern to the exposure as shown in Fig. 1b and a development. The angles α formed at the respective sidewalls of the resist pattern of the component can optionally be determined depending on the material and film thickness of the applied photoresist 30 as well as the exposure condition to the irradiation performed with the intervening photomask 40 as shown in Fig. 1b. Where laser light is used, a 3D lens may be employed to vary the irradiation intensity on the both sidewalls of the resist pattern. The irradiation intensity on the both sidewalls may also be varied by means of a gray mask.

In Fig. 1d, the photoresist 30 is applied to form a connection pillar for a multi-stage connection as in Fig. 1b. The photoresist 30 is then subjected to an exposure from the direction of the arrows with the intervening photomask 40 having the pattern of the pillared shape. Fig. 1e depicts a resist pattern 37 of the connection pillar provided on the resist pattern 35. The resist pattern 37 is formed by subjecting the pattern of the pillared shape to the exposure in Fig. 1d and the development.

In Fig. 1f, a desired metal, e.g., Ni, is electroplated to a predetermined thickness so as to cover the resist pattern 35 and 37 in Fig. 1e, thereby creating a multi-stage master mold 20. In Fig. 1g, the multi-stage master mold 20 created by electroplating in Fig. 1f is separated from the metal substrate 10. Here, the rough surface profile of the roughening layer 15 has been transferred to a roughened surface layer 17 of the multi-stage master mold. The angles α at the both sidewalls in Fig. 1c remain to be the angles α in Fig. 1g.

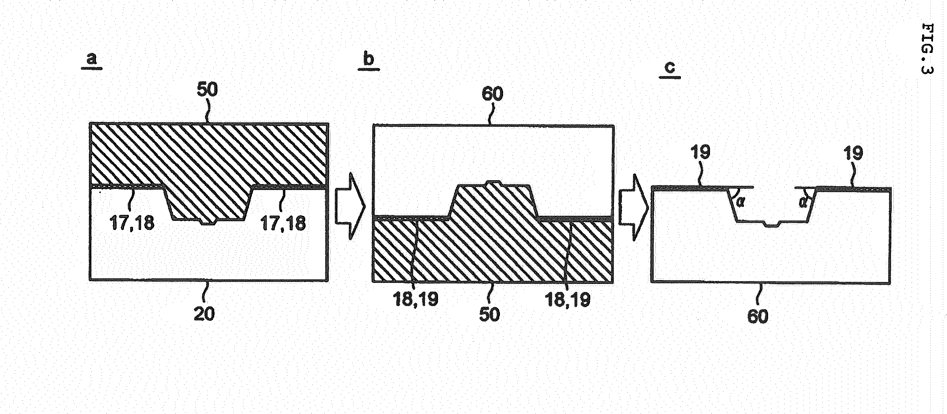

It is intended that the roughened surface layer 17 of the multi-stage transfer mold is transferred to the multi-stage son mold 60, which is eventually used as the multi-stage transfer mold and illustrated in Fig. 3, for the sake of increased adhesion strength to an insulation layer to be formed thereon. As such, if the adhesion strength is high enough, it is not necessarily required. In addition, making the angles α as acute as 45° to 88° allows the pattern density of an intended component to be improved.

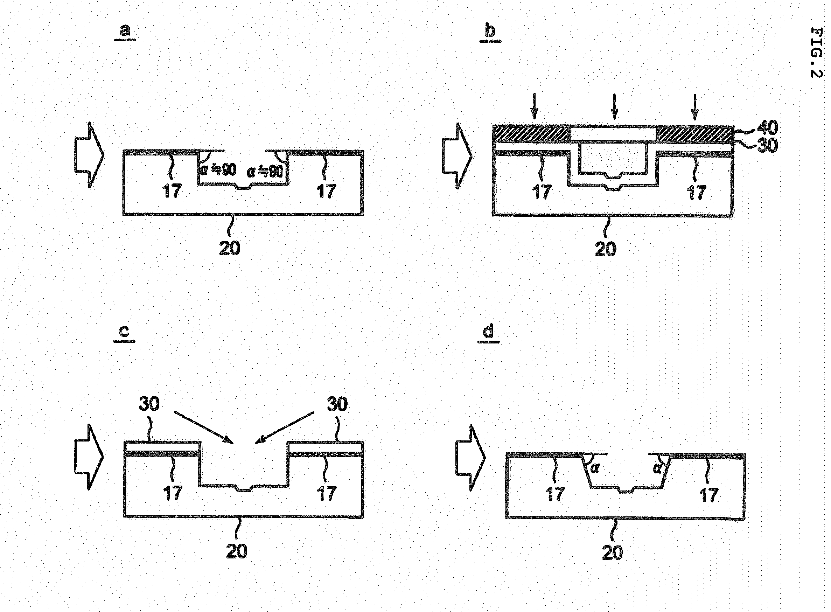

Fig. 2 is a process drawing showing the steps for manufacturing a multi-stage master mold by beam treatment according to the present invention. This is a second embodiment of the present invention. Fig. 2a shows the master mold 20 created in Fig. 1. Here, the angles α are each approximately 90°. In Fig. 2b, the photoresist 30 for forming a reverse pattern of the shape of the component is applied to a predetermined thickness. The photoresist 30 is then subjected to an exposure effected from the direction of the arrows with the intervening photomask 40 having the reverse pattern of the component. As a result, that portion of the resist which corresponds to the component is developed and removed, thereby leaving the photoresist 30 only on the flat roughened surface layer 17 of the multi-stage master mold.

In Fig. 2c, the resist pattern formed in Fig. 2b is used as a protective film in treating the sidewalls of the pattern of the component by cutting with beam irradiation. Here, the irradiation beam is modulated in such a manner that the angles α are tailored to form predetermined degrees. The arrows show the direction of the beam. The multi-stage master mold 20 shown in Fig. 2d has not only the same shape but also the same function and characteristics as the multi-stage master mold 20 shown in Fig. 1g. The irradiation beam may be an electron beam, an ion beam, or a FIB (Focused Ion Beam) whose irradiation strength is variable by focusing the beam with a lens.

Fig. 3 is a process drawing showing the steps for manufacturing a multi-stage son mold according to the present invention. In Fig. 3a, a desired metal, e.g., Ni, is electroplated to a predetermined thickness on that surface of the manufactured multi-stage master mold 20 on which the pattern of the component has been formed. A multi-stage mother mold 50 created thereby is then separated. In Fig. 3b, a desired metal, e.g., Ni, is electroplated to a predetermined thickness on that surface of the multi-stage mother mold 50 on which the pattern of the component has been formed, so that a multi-stage son mold 60 is created in the same manner. In Fig. 3c, the multi-stage son mold 60 thus created by electroplating is separated from the multi-stage mother mold 50.

In this way, the multi-stage son mold 60 is created by transferring the multi-stage mother mold 50 created by transferring the multi-stage master mold 20. As such, it takes over the same function and characteristics as those of the master mold 20. Furthermore, the multi-stage son mold 60 is integrally formed of one metal material. This, with the releasing layer formation process and the insulation layer formation process performed on a roughed surface layer 19 of the multi-stage son mold as will be explained next, makes it possible to obtain a transfer mold which has a desired aspect ratio and angles α, does not generate a strip of the pattern even after repetitive use, and is highly suitable for quantity production.

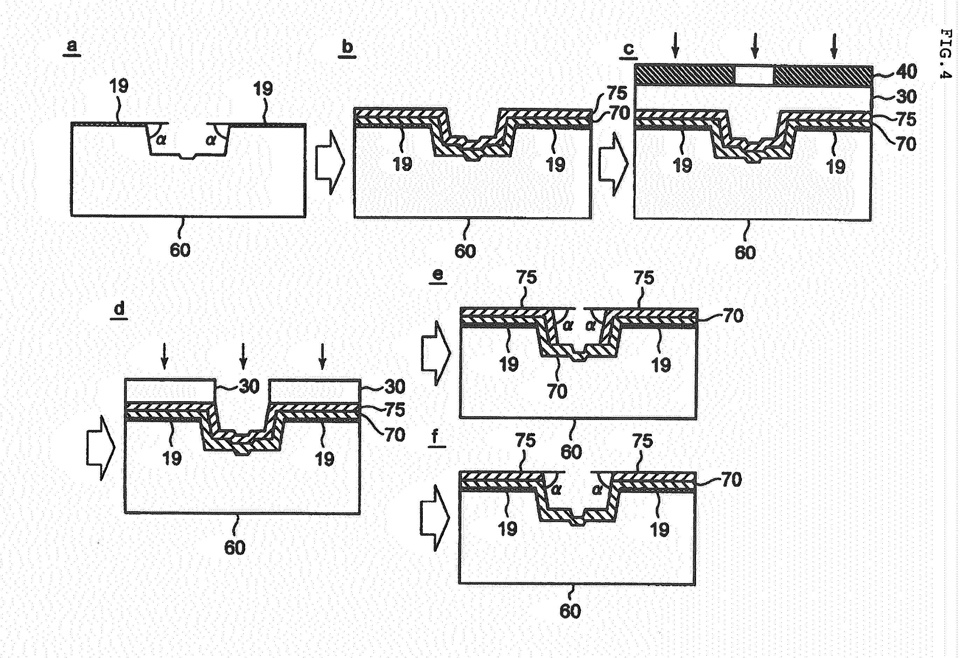

Fig. 4 is a process drawing showing the steps for manufacturing a multi-stage transfer mold according to the present invention. Fig. 4a shows the multi-stage son mold 60 created in Fig. 3c. In Fig. 4b, the multi-stage son mold 60 is subjected to heat treatment under prescribed conditions for ease of release and transfer of the component to be produced. This is followed by the releasing layer formation process for forming a NiOx film 70 on the surface of the multi-stage son mold 60. The NiOx film 70 has conductivity and low adhesive property to the electroplated component, which allows an easy release.

Subsequently, an insulation layer formation process for forming an insulation layer is performed by forming a SiO₂ film 75 chemically by CVD (Chemical Vapor Deposition) or physically by sputtering on the surface. Alternatively, the SiO₂ film 75 is formed by applying polysilazane onto the surface and treating it with heat. In Fig. 4c, in order to remove the SiO₂ film 75 formed on the pattern of the component, the photoresist 30 to be patterned to a predetermined shape is applied on the SiO₂ film 75 to a predetermined thickness. After that, the photoresist is subjected to an exposure effected from the direction of the arrows with the intervening photomask 40 having a reverse pattern of the component. Then, in Fig. 4d, with use of the patterned photoresist 30 as a mask, the SiO₂ film 75 is removed physically by beam irradiation from the direction of the arrows or chemically by hydrofluoric acid treatment or the like.

Depending on the shape of the patterned photoresist 30 and the removal conditions of the SiO₂ film 75, the multi-stage transfer mold is completed either by removing the SiO₂ film 75 only in the bottom portion so that it is left on the sidewalls as shown in Fig. 4e or by removing the SiO₂ film 75 both on the sidewalls and in the bottom portion as shown in Fig. 4f. In a case where polysilazane is used, similar steps as in screen printing are carried out. That is, following the formation of the NiOx film 70 in Fig. 4b, polysilazane is printed in that portion of the surface of the NiOx film 70 which is other than the pattern of the component for forming the component. It is then treated with heat. In this manner, the same shape as shown in Fig. 4f can be obtained.

The releasing layer formation process is a process in which an insulation layer is formed with metal oxides (AlOx, TiOx, etc.), nitrides or organic substances (resist) on the son mold 60 in Fig. 4b to such a thickness of 1 to 1000 A that allows the conductivity thereof to be maintained. The insulation layer formation process is a process in which an insulator such as SiO₂ or a resist is provided in the portion of the surface other than the pattern of the component. The releasing layer formation process and the insulation layer formation process may be performed in reverse order.

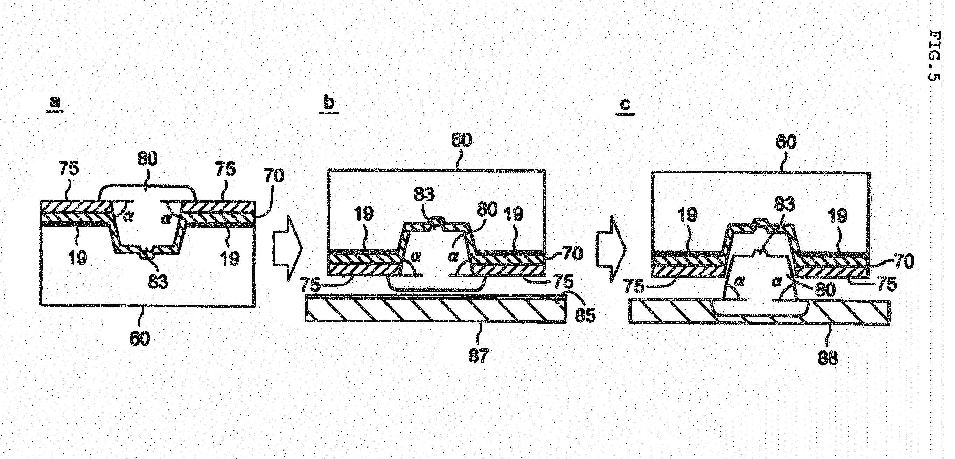

Fig. 5 is a process drawing showing the steps for manufacturing a component by electroplating according to the present invention. In Fig. 5a, a desired metal (Ag, Cu, Ni, etc.) is electroplated on the son mold 60 to form the component 80. In Fig. 5b, the component 80 molded to have a connection pillar 83 by electroplating is transferred onto the adhesive bond 85 and then adhered to the component substrate 87. Alternatively, in Fig. 5c, the component 80 is adhered to a green sheet 88 which is then treated with heat for curing. Where the component 80 is adhered to the green sheet 88, the use of the adhesive bond 85 is eliminated by such softness of the green sheet 88 before curing that the component 80 is buried therein.

In this way, the component 80, which is of an optional shape and has a connection pillar 83, is provided by electroplating. It can be repetitively molded and transferred onto the component substrate 87 or green sheet 88 for diverse intended use. This eliminates the need for the steps required for a connection with another electronic device in the upper part as in production of a capacitor. That is, the step of forming the contact hole 95 for connecting the upper extraction electrode 98 with the upper terminal 92 and the step of filling up the contact hole 95 with the Al film to provide a pillared conductor of Al for the connection with the upper extraction electrode 98 are no longer necessary. Similarly, the step of providing a pillared conductor is no longer necessary also for the connection of the multi-layer wiring or a multi-layer coil. Thus, it is possible to reduce the number of steps for providing the connection pillar for the connection with the upper part in the production of the component of the intended semiconductor device. Furthermore, in the production of the small gear, the pillared conductor is formed as an integral stage, which allows to produce a small stepped gear.

As described above, the present invention enables an easy multi-stage formation of a small stepped gear of machine components and an easy multi-stage connection of a wiring, a coil, a capacitor, etc. of electric components of a semiconductor device. Accordingly, it is possible to provide such a component by electroplating in production of a multi-stage component by electroplating that can save labor in steps of forming multiple stages and of multi-stage connection.

### Description of Reference Numerals

- 10: metal substrate
- 15: roughening layer
- 17: roughened surface layer of multi-stage master mold
- 18: roughened surface layer of multi-stage mother mold
- 19: roughened surface layer of multi-stage son mold
- 20: multi-stage master mold
- 30: photoresist
- 35: resist pattern of component
- 37: resist pattern of connection pillar
- 40: photomask
- 50: multi-stage mother mold
- 60: multi-stage son mold
- 70: NiOx film
- 75: SiO₂ film
- 80: component
- 83: connection pillar
- 85: adhesive bond
- 87: component substrate
- 88: green sheet
- 90: upper electrode
- 91: upper terminal
- 92: upper terminal
- 93: SiO₂ film
- 94: thermally oxidized film
- 95: contact hole
- 96: connection pillar
- 97: lower electrode
- 98: upper extraction electrode
- 99: semiconductor substrate
- α: inclination angle at sidewall
- β: inclination angle at sidewall

1. A multi-stage transfer mold manufacturing method comprising steps of:
   forming a resist pattern having a shape of a component with a desired aspect ratio on a metal substrate, a sidewall of the resist pattern forming a desired angle α;
   forming, on the resist pattern, a resist pattern having a shape and a thickness of a connection pillar for connecting with an upper layer;
   creating a transfer mold by filling up the resist pattern on which the resist pattern having the shape of the connection pillar by electroplating to a predetermined thickness; and
   providing a master mold by separating the transfer mold from the metal substrate.
2. A multi-stage transfer mold manufacturing method comprising steps of:
   forming a resist pattern having a shape of a component with a desired aspect ratio on a metal substrate, a sidewall of the resist pattern forming a desired angle α;
   forming, on the resist pattern, a resist pattern having a shape and a thickness of a connection pillar for connecting with an upper layer;
   creating a transfer mold by filling up the resist pattern on which the resist pattern having the shape of the connection pillar by electroplating to a predetermined thickness;
   providing a master mold by separating the transfer mold from the metal substrate;
   creating a son mold by transferring by way of the master mold and a mother mold; and
   providing a transfer mold by performing, on the son mold, a releasing layer formation process for facilitating a release of the component to be formed by electroplating and an insulation layer formation process for forming an insulation layer in that portion which is other than a portion in which the component is to be formed.
3. The method according to claim 1 or 2, comprising a step of forming a layer on a surface of the metal substrate as a first step.
4. A multi-stage transfer mold manufacturing method comprising steps of:
   forming a resist pattern having a shape of a component with a desired aspect ratio on a metal substrate, a sidewall of the resist pattern forming an angle of approximately 90°;
   forming, on the resist pattern, a resist pattern having a shape and a thickness of a connection pillar for connecting with an upper layer;
   creating a transfer mold by filling up the resist pattern on which the resist pattern having the shape of the connection pillar by electroplating to a predetermined thickness;
   separating the transfer mold from the metal substrate;
   removing a photoresist partially to leave a resist pattern layer in that portion on the separated transfer mold which is other than a portion corresponding to the component to be transferred; and
   providing a master mold by treating the sidewall of the shape of the component with beam irradiation using the resist pattern layer as a protective layer, the beam irradiation being modulated such that the angle at the sidewall of the shape of the component is tailored to form approximately 90° or a given angle less than 90°
5. A multi-stage transfer mold manufacturing method comprising steps of:
   forming a resist pattern having a shape of a component with a desired aspect ratio on a metal substrate, a sidewall of the resist pattern forming an angle of approximately 90°;
   forming, on the resist pattern, a resist pattern having a shape and a thickness of a connection pillar for connecting with an upper layer;
   creating a transfer mold by filling up the resist pattern on which the resist pattern having the shape of the connection pillar by electroplating to a predetermined thickness;
   separating the transfer mold from the metal substrate;
   removing a photoresist partially to leave a resist pattern layer in that portion on the separated transfer mold which is other than a portion corresponding to the component to be transferred;
   providing a master mold by treating the sidewall of the shape of the component with beam irradiation using the resist pattern layer as a protective layer, the beam irradiation being modulated such that the angle at the sidewall of the shape of the component is tailored to form approximately 90° or a given angle less than 90°;
   creating a son mold by transferring by way of the master mold and a mother mold; and
   providing a transfer mold by performing, on the son mold, a releasing layer formation process for facilitating a release of the component to be formed by electroplating and an insulation layer formation process for forming an insulation layer in that portion which is other than a portion in which the component is to be formed.
6. The method according to claim 4 or 5, comprising a step of forming a surface roughening layer of the metal substrate as a first step.
7. A master mold manufactured by the method according to any one of claims 1, 3, 4 and 6 having a cross-sectional surface with a desired aspect ratio, a sidewall of the cross-sectional surface forming an angle between 45° and 88°
8. A transfer mold manufactured by the method according to any one of claims 2, 3, 5 and 6.
9. A component produced by electroplating, the component being molded by the electroplating using the transfer mold according to claim 8 and transferred.

## Claims

1. A multi-stage transfer mold manufacturing method comprising steps of:
forming a resist pattern having a shape of a component with a desired aspect ratio on a metal substrate, a sidewall of the resist pattern forming a desired angle α;
forming, on the resist pattern, a resist pattern having a shape and a thickness of a connection pillar for connecting with an upper layer;
creating a transfer mold by filling up the resist pattern on which the resist pattern having the shape of the connection pillar by electroplating to a predetermined thickness; and
providing a master mold by separating the transfer mold from the metal substrate leaving the metal substrate and the resist pattern.

2. A multi-stage transfer mold manufacturing method comprising steps of:
forming a resist pattern having a shape of a component with a desired aspect ratio on a metal substrate, a sidewall of the resist pattern forming a desired angle α;
forming, on the resist pattern, a resist pattern having a shape and a thickness of a connection pillar for connecting with an upper layer;
creating a transfer mold by filling up the resist pattern on which the resist pattern having the shape of the connection pillar by electroplating to a predetermined thickness;
providing a master mold by separating the transfer mold from the metal substrate leaving the metal substrate and the resist pattern;
creating a son mold by transferring by way of the master mold and a mother mold; and
providing a transfer mold by performing, on the son mold, a releasing layer formation process for facilitating a release of the component to be formed by electroplating and an insulation layer formation process for forming an insulation layer in that portion which is other than a portion in which the component is to be formed.

3. The method according to claim 1 or 2, comprising a step of forming a layer on a surface of the metal substrate as a first step.

4. A multi-stage transfer mold manufacturing method comprising steps of:
forming a resist pattern having a shape of a component with a desired aspect ratio on a metal substrate, a sidewall of the resist pattern forming an angle of approximately 90°;
forming, on the resist pattern, a resist pattern having a shape and a thickness of a connection pillar for connecting with an upper layer;
creating a transfer mold by filling up the resist pattern on which the resist pattern having the shape of the connection pillar by electroplating to a predetermined thickness;
separating the transfer mold from the metal substrate;
removing a photoresist partially to leave a resist pattern layer in that portion on the separated transfer mold which is other than a portion corresponding to the component to be transferred; and
providing a master mold by treating the sidewall of the shape of the component with beam irradiation using the resist pattern layer as a protective layer, the beam irradiation being modulated such that the angle at the sidewall of the shape of the component is tailored to form approximately 90° or a given angle less than 90°.

5. A multi-stage transfer mold manufacturing method comprising steps of:
forming a resist pattern having a shape of a component with a desired aspect ratio on a metal substrate, a sidewall of the resist pattern forming an angle of approximately 90°;
forming, on the resist pattern, a resist pattern having a shape and a thickness of a connection pillar for connecting with an upper layer;
creating a transfer mold by filling up the resist pattern on which the resist pattern having the shape of the connection pillar by electroplating to a predetermined thickness;
separating the transfer mold from the metal substrate;
removing a photoresist partially to leave a resist pattern layer in that portion on the separated transfer mold which is other than a portion corresponding to the component to be transferred;
providing a master mold by treating the sidewall of the shape of the component with beam irradiation using the resist pattern layer as a protective layer, the beam irradiation being modulated such that the angle at the sidewall of the shape of the component is tailored to form approximately 90° or a given angle less than 90°;
creating a son mold by transferring by way of the master mold and a mother mold; and
providing a transfer mold by performing, on the son mold, a releasing layer formation process for facilitating a release of the component to be formed by electroplating and an insulation layer formation process for forming an insulation layer in that portion which is other than a portion in which the component is to be formed.

6. The method according to claim 4 or 5, comprising a step of forming a surface roughening layer of the metal substrate as a first step.

7. A master mold manufactured by the method according to any one of claims 1, 3, 4 and 6 having a cross-sectional surface with a desired aspect ratio, a sidewall of the cross-sectional surface forming an angle between 45° and 88°

8. A transfer mold manufactured by the method according to any one of claims 2, 3, 5 and 6.

9. A component produced by electroplating, the component being molded by the electroplating using the transfer mold according to claim 8 and transferred.
